# EUROPÄISCHE PATENTANMELDUNG

(11) **EP 3 564 140 A1**
(43) Veröffentlichungstag der Anmeldung: **06.11.2019**
(21) Anmeldenummer: 18170715.9
(22) Anmeldetag: 03.05.2018
(51) Int. Cl.: B65B 13/18, B65B 13/22, B65B 13/34, B65B 27/06, B65B 57/02, B65B 57/18, G01D 9/00, G01D 11/24, B65D 71/04, G06K 19/07, B65B 27/08

(54) **ABSTANDSHALTER ZUR BEABSTANDUNG EINES UMREIFUNGSBANDS VON EINEM PACKGUT UND ANORDNUNG MIT SOLCH EINEM ABSTANDSHALTER**

(71) Anmelder: voestalpine Stahl GmbH, 4020 Linz (AT)
(72) Erfinder: Gutenthaler, Harald, 4293 Gutau (AT); Brummayer, Markus, 4082 Aschach (AT); Schickmaier, Walter, 4053 Ansfelden (AT); Nenning, Martin, 4310 Mauthausen (AT)
(74) Vertreter: Jell, Friedrich

(57) **Zusammenfassung**

Es wird ein Abstandshalter (1) zur Beabstandung eines Umreifungsbands (2) von einem Packgut (3), insbesondere aufgewickeltem Metallband, gezeigt, mit einem Gehäuse (4), das mindestens eine, insbesondere über das gesamte Gehäuse (4) durchgehend verlaufende, Führungsnut (6) für das Umreifungsband (2) aufweist. Um den Abstandshalter (1) für ein Umreifungsband standfest zu funktionalisieren, wird vorgeschlagen, dass der Abstandshalter (1) eine elektronische Einrichtung (7) mit mindestens einem Sensor (8) und mit wenigstens einer mit dem Sensor (8) verbundenen Telematikeinrichtung (9) im Gehäuse (4) aufweist.

## Beschreibung

Die Erfindung betrifft einen Abstandshalter zur Beabstandung eines Umreifungsbands von einem Packgut, insbesondere aufgewickeltem Metallband, mit einem Gehäuse, das mindestens eine, insbesondere über das gesamte Gehäuse durchgehend verlaufende, Führungsnut für das Umreifungsband aufweist.

Um Beschädigungen an einem aufgewickelten Metallband bzw. Coil als Packgut durch ein beispielsweise mit einer Verschlusshülse geschlossenes Umreifungsband zu vermeiden, ist es aus dem Stand der Technik bekannt, Abstandshalter zwischen aufgewickeltem Metallband und Umreifungsband bzw. Verschlußhülse vorzusehen. Zur Führung des Umreifungsbands weist der Abstandshalter hierzu eine über die gesamte Oberseite des Gehäuses durchgehende Führungsnut auf. Diese Führungsnut teilt das Gehäuse in Draufsicht auf den Abstandshalter gesehen also in zwei Gehäusesegmente.

Zudem sind aus dem Stand der Technik Telematiksysteme bekannt, die mit Telematikmodulen an Packgut diverse Mess-, Prüf- und/oder Logistikaufgaben etc. erfüllen. Solch ein Telematikmodul weist in seinem Modulgehäuse eine Telematikeinrichtung auf. Nachteilig bedarf es für die Bestückung des Packguts mit einem Telematikmodul einer sorgfältigen Positionierung am Packgut, um Beschädigungen - beispielsweise beim Stapeln oder dem Transport des Packguts - zu vermeiden.

Die Erfindung hat sich, ausgehend vom eingangs geschilderten Stand der Technik, die Aufgabe gestellt, die Funktionalisierung von Packgut zu erleichtern und in der Standfestigkeit zu erhöhen. Zudem soll auch konstruktive Einfachheit erreicht werden.

Die Erfindung löst die gestellte Aufgabe durch die Merkmale des Anspruchs 1.

Weist der Abstandshalter eine elektronische Einrichtung mit mindestens einem Sensor und mit wenigstens einer mit dem Sensor verbundenen Telematikeinrichtung im Gehäuse auf, kann zunächst der Abstandshalter in seiner Funktionalität erweitert werden - und damit auch andere Aufgaben neben seiner mechanischen Schutzfunktion erfüllen. Erfindungsgemäß kann aber mit dem Vorsehen der elektronischen Einrichtung im Gehäuse die Schutzfunktion des Abstandshalters genutzt werden, mechanische Belastungen von der elektronischen Einrichtung standfest fernzuhalten. Damit ist mithilfe des erfindungsgemäßen Abstandshalters eine Lösung gefunden, nicht nur Packgut handhabungsfreundlich telematisch zu funktionalisieren, sondern diese Funktionalisierung gleichzeitig durch die vergleichsweise hohe Standfestigkeit der Abstandshalter auch standfest am Packgut zu gewährleisten.

Vorzugsweise ist die Telematikeinrichtung in Draufsicht auf den Abstandshalter gesehen zumindest abschnittsweise im Gehäuse seitlich neben der Führungsnut angeordnet. Damit können selbst hohe Zurrbelastungen des Umreifungsbands auf den Abstandshalter von dessen elektronischen Einrichtung sicher ferngehalten werden. Dies insbesondere von der Telematikeinrichtung, welche gegenüber mechanischen Belastungen - beispielsweise auf deren Antenne - empfindlich reagieren kann. Die Funktionalität der Telematikeinrichtung kann derart sichergestellt bleiben, womit der erfindungsgemäßen Abstandshalter standfest funktionalisierbar ist.

Weist die Telematikeinrichtung eine Kommunikationseinheit mit einer Antenne auf, wobei die Antenne der Telematikeinrichtung in Draufsicht auf den Abstandshalter gesehen im Gehäuse, vorzugsweise vollständig, seitlich neben der Führungsnut angeordnet ist, können Störungen der Datenübertragung bzw. des Datenempfangs der Telematikeinrichtung vermieden werden. Beispielsweise ist damit sicherstellbar, dass die Antenne keiner Beeinträchtigung durch eine darüberliegende metallische Verschlusshülse, Verschlussschnalle etc. am Umreifungsband unterliegt. Die Telematikeinrichtung kann daher stets eine hohe Sende- und Empfangsleistung sicherstellten - was die Standfestigkeit des Abstandshalters weiter erhöht.

Die Funktionalisierung des Abstandshalters hinsichtlich der Überwachung seiner Montageparameter kann erhöht werden, wenn ein als Drucksensor ausgebildeter Sensor unterhalb der Führungsnut im Gehäuse angeordnet ist. Durch die besondere Lage des Sensors kann beispielsweise genau auf die am Packgut anliegenden Zurrkräfte geschlossen werden - etwa, um so Verpackungsfehler oder auch Transportschäden festzustellen und im Transpondersystem zu erfassen.

Der autarke Betrieb der elektronischen Einrichtung des Abstandshalters kann ermöglicht werden, wenn die elektronische Einrichtung einen, vorzugweise wiederaufladbaren, Energiespeicher zu deren elektrischen Versorgung aufweist. Ist der Energiespeicher in Draufsicht auf den Abstandshalter gesehen im Gehäuse seitlich neben der Führungsnut angeordnet, kann dies den Energiespeicher gegenüber mechanischer Belastungen vom Umreifungsband schützen und damit die Transportsicherheit des Abstandshalters sicherstellen.

Die Konstruktion des Abstandshalters kann weiter vereinfacht werden, wenn die Führungsnut in Draufsicht auf den Abstandshalter gesehen das Gehäuse in ein erstes und ein zweites Gehäusesegment teilt, die sich entlang der Führungsnut gegenüberliegen. Insbesondere kann dies auch die Handhabung des Abstandshalters weiter erleichtern.

Die elektromagnetische Verträglichkeit des Abstandshalters kann erhöht werden, wenn die Kommunikationseinheit im ersten Gehäusesegment und die Antenne der Kommunikationseinheit im zweiten Gehäusesegment angeordnet sind. Zudem sind derart der Signal-Rauschabstand der Kommunikationseinheit und damit die Standfestigkeit der drahtlosen Verbindung mit dem Abstandshalter weiter erhöhbar.

Ist die elektronische Einrichtung im ersten Gehäusesegment vorgesehen, kann dies die Konstruktion des Abstandshalters vereinfachen und auch dessen Ausrichtung bei der Montage erleichtern.

Weist die Führungsnut an ihrem Nutgrund eine Stufe auf, können das Schließen bzw. Festzurren des Umreifungsbands erleichtert werden. Des Weiteren ist damit ermöglicht, auch die Lage eines Verschlusses am Umreifungsband in der Nut am Abstandshalter festzulegen. Von einer gleichbleibenden Sende- und Empfangseigenschaft am Kommunikationseinheit kann sohin ausgegangen werden.

Ist der Sensor unterhalb der Stufe angeordnet, kann durch die Position des Sensors an einer Extremstelle der Kraftbelastung des Umreifungsbands auf den Abstandshalter eine genaue Messdatenerfassung sichergestellt werden.

Ein mechanisch belastbarer, aber dennoch vergleichsweise leichter Abstandshalter kann geschaffen werden, wenn das Gehäuse eine Bodenplatte und einen Oberkörper aufweist, zwischen denen die elektronische Einrichtung angeordnet ist.

Diese mechanische Stabilität des Abstandshalters ist weiter erhöhbar, wenn die elektronische Einrichtung im Gehäuse gekapselt vorgesehen ist. Vorzugsweise ist diese elektronische Einrichtung mit Vergussmasse verkapselt, um deren Funktionalität auch bei widrigen Umwelteinflüssen standfest gewährleisten zu können.

Weist die elektronische Einrichtung eine Lichtquelle, insbesondere LED, auf, die visuell erkennbar vorgesehen ist, kann dies die Handhabung des Abstandshalters erleichtern.

Handhabungsfreundlich kann der Abstandshalter zwischen Umreifungsband und Coil positioniert werden, wenn das Gehäuse eine flache oder gewölbte Unterseite aufweist, welche der Oberseite des Gehäuses mit der Führungsnut gegenüberliegt. Besteht zudem das Gehäuse aus einem elastischen Material kann der Abstandshalter - je nach Durchmesser des Coils - flexibel der Außenkontur des Coils folgen und damit Verspannungen im Gehäuse vermeiden, welche Verspannungen eine Grfahr für das Versagen der elektronischen Einrichtung darstellen.

Der erfindungsgemäße Abstandshalter kann sich insbesondere bei einer Anordnung mit einem Packgut, insbesondere aufgewickeltem Metallband, mit einem, vorzugsweise in Umfangsrichtung des Packguts verlaufenden, Umreifungsband auszeichnen, bei welcher Anordnung der Abstandshalter zwischen dem Packgut und dem Umreifungsband vorgesehenen ist und wobei sich das Umreifungsband in der Führungsnut des Abstandshalters erstreckt.

Vorzugsweise ist der Abstandshalter auf der Oberseite des Packguts angeordnet, um derart eine hohe Sende- und Empfangsleistung der Telematikeinrichtung zu erreichen.

Eine vergleichsweise hohe Sende- und Empfangsleistung kann ermöglicht werden, wenn der Abstandshalter am als aufgewickeltes Metallband ausgeführten Packgut im Bereich von plus minus 35 Grad, insbesondere von plus minus 25 Grad, zu Senkrechten des Packguts angeordnet ist.

In den Figuren ist beispielsweise der Erfindungsgegenstand anhand einer Ausführungsvariante näher dargestellt. Es zeigen
- Fig. 1: eine dreidimensionale Ansicht auf einen Abstandshalter und
- Fig. 2: eine Draufsicht auf den Abstandshalter nach Fig. 1 mit einem vom Abstands-halter geführten Umreifungsband um einem aufgewickelten Metallband als Packgut.

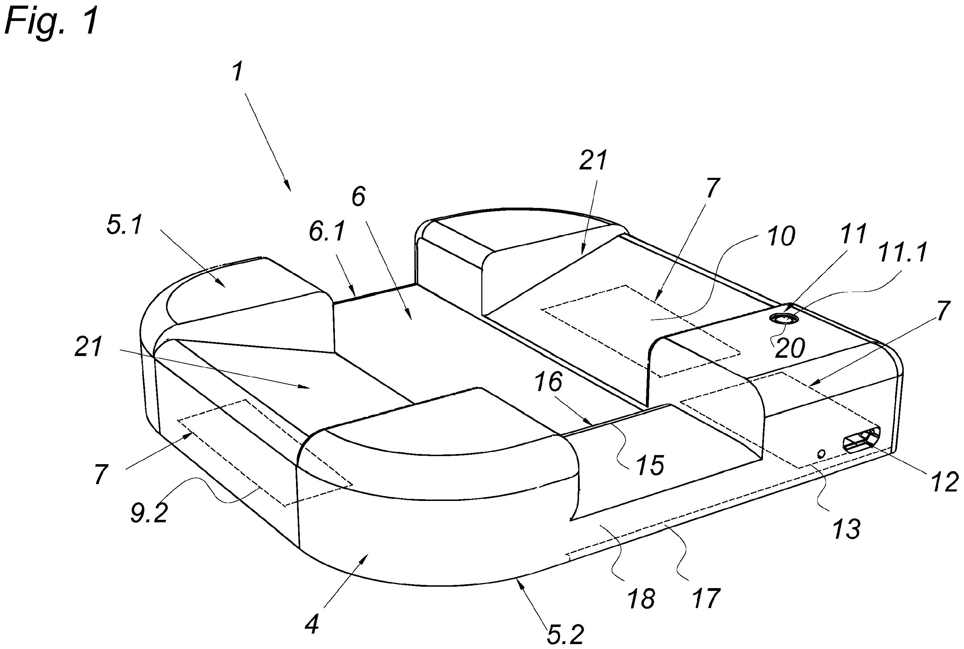

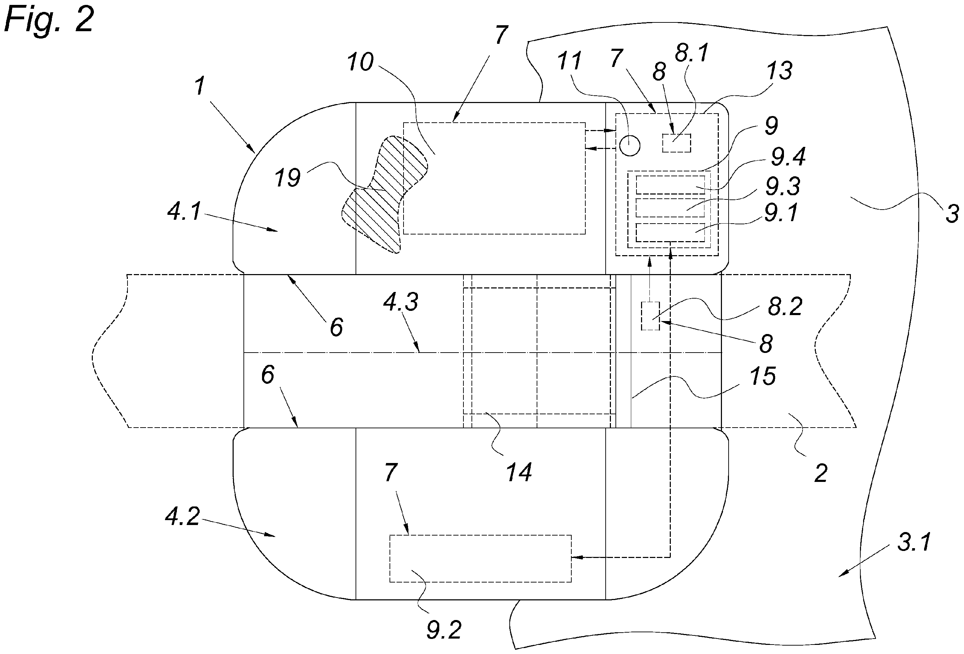

Nach den Figuren 1 und 2 wird ein Abstandshalter 1 dargestellt, der ein Umreifungsbands 2 von einem Packgut 3, nämlich von einem aufgewickelten Metallband bzw. Coil, beabstandet. Der Abstandshalter 1 ist auf der Oberseite 3.1 des Packguts 3 vorgesehen, welches Packgut 3 beispielsweise aus der Ware selbst oder auch mit Verpackungsmaterial verpackt sein kann. Das Metallband dient als Beispiel für ein Packgut - anders Packgut 3 beispielsweise ein Stapel von Blechen oder Platinen, etc. ist ebenfalls vorstellbar.

Der Abstandshalter 1 weist ein Gehäuse 4 auf, das an seiner Oberseite 5.1 eine Führungsnut 6 zur seitlichen Führung des Umreifungsbands 2 ausbildet, welches Umreifungsband 2 sich in der Führungsnut 6 hierfür auch erstreckt. Das Umreifungsband 2 verläuft in Umfangsrichtung des Packguts 3, und damit außen um das aufgewickelte Metallband. Als Umreifungsband ist ein Kunststoffband, Metallband, Textilband, Gewebeband etc. vorstellbar.

Die Führungsnut 6 teilt in Draufsicht auf den Abstandshalter 1 gesehen das Gehäuse 4 in zwei Gehäusesegmente 4.1, 4.2, die an einer strichliert eingezeichneten Mittelinie 4.3 aneinandergrenzen und sich damit entlang der Führungsnut gegenüberliegen.

Um den Abstandshalter 1 informationstechnologisch zu funktionalisieren, weist dieser eine elektronische Einrichtung 7 auf. Diese elektronische Einrichtung 7 umfasst unter anderem mehrere Sensoren 8. So beispielsweise einen Ortungssensor 8.1 zur Ortung oder Ortsbestimmung des Abstandshalters 1. Bei dem Ortungssensor 8.1 kann es sich beispielsweise um eine GPS-Antenne handeln.
Weiter umfasst diese elektronische Einrichtung 7 einen Telematikeinrichtung 9, einen Energiespeicher 10, beispielsweise eine Batterie, eine Anzeige 11 und eine Schnittstelle 12. Ortungssensor 8.1, Telematikeinrichtung 9, Anzeige 11 und Schnittstelle 12 sind über eine Platine 13 elektrisch miteinander verbunden - was nicht näher dargestellt ist.

Die elektronische Einrichtung 7 ist im Gehäuse 4 besonders geschützt vorgesehen - dies, indem die Telematikeinrichtung 9 in Draufsicht auf den Abstandshalter gesehen im Gehäuse 4 seitlich neben der Führungsnut 6 angeordnet ist. Zurrkräfte des Umreifungsbands 2 werden sohin von vergleichsweise empfindlichen Teilen der elektronischen Einrichtung 7 ferngehalten - was zu einer hohen Standfestigkeit des Abstandshalters 1 im Bezug auf dessen informationstechnologische Funktionalisierung führt.

Die Telematikeinrichtung 9 weist eine Kommunikationseinheit 9.1 mit einer Antenne 9.2 auf. Diese Antenne 9.2 ist in Draufsicht auf den Abstandshalter 1 gesehen im Gehäuse 4 vollständig seitlich neben der Führungsnut 6 angeordnet - wie anhand Fig. 2 erkennbar. Damit sind Störungen in der drahtlosen Verbindung im nicht näher dargestellten Telematiksystem zu vermeiden - welche Störungen beispielsweise durch ein Abdecken der Antenne 9.2 von einem metallischen Verschluss 14, der das Umreifungsband 2 verschließt, auftreten können.

Wie der Fig. 2 insbesondere entnommen werden kann, ist die Kommunikationseinheit 9.1 im ersten Gehäusesegment 4.1 und die Antenne 9.2 im anderen, zweiten Gehäusesegment 4.2 angeordnet. Diese räumliche Trennung minimiert die Gefahr von Störungen in der drahtlosen Verbindung - und erhöht damit die Erreichbarkeit des Abstandshalters 1.

Die Telematikeinrichtung 9 weist unter anderem einen Prozessor 9.3 und einen Speicher 9.4 auf, um die telematische Funktion, beispielsweise der Erfassung, Aufzeichnung und/oder Übermittlung von Daten, etc. erfüllen zu können.

Zur autarken elektrischen Energieversorgung der elektronischen Einrichtung 7 weist diese einen wiederaufladbaren Energiespeicher 10 auf. Dieser Energiespeicher 10 ist in Draufsicht auf den Abstandshalter 1 gesehen im Gehäuse 4 seitlich neben der Führungsnut 6 angeordnet, um mechanische Beschädigungen des Energiespeichers 10 durch Kräfte des Umreifungsbands 2 auf den Abstandshalter 1 zu vermeiden. Damit kann der Abstandshalter 1 eine hohe Transportsicherheit erfüllen.

Zur autarken Aufladung des Energiespeichers 10 kann das Gehäuse mindestes ein Solarpanel oder einen Energie-Harvester etc. aufweisen. Der Energiespeichers 10 kann aber auch durch die Schnittstelle 12 aufgeladen werden.

Alternativ kann auch die gesamte elektronische Einrichtung 7 im ersten Gehäusesegment 4.1 vorgesehen sein, was nicht dargestellt ist.

Zudem ist die Führungsnut 6 des Gehäuses 4 besonders gestaltet. Die Führungsnut, welche über das gesamte Gehäuse 4 durchgehend verlaufend vorgesehen ist, zeigt an ihrem Nutgrund 6.1 eine Stufe 15 - und bildet damit einen Anschlag 16 für den Verschluss 14 am Umreifungsbands 2 aus. Dies sichert nicht nur die Position des Abstandshalters 1 am Packgut 3, sondern bestimmt auch die Lage des meist metallischen Verschlusses 14 - wodurch eine Beeinträchtigung der drahtlosen Verbindung der Antenne 9.2 reproduzierbar verhindert wird.

Des Weiteren ist der ein als Drucksensor 8.2 ausgebildete Sensor 8 unterhalb der Führungsnut 6 für das Umreifungsband 2 im Gehäuse 4 angeordnet, und zwar unterhalb der Stufe 15 der Führungsnut 6. Dies stellt eine präzise und verlässliche Messdatenaufnahme vom Umreifungsband 2 abhängigen Parametern sicher. Der Abstandshalter 1 kann damit standfest funktionalisiert werden.

Wie zudem in Fig. 1 angedeutet, besteht das zweiteilige Gehäuse 4 aus einer Bodenplatte 17 und einen Oberkörper 18, zwischen denen die elektronische Einrichtung 7 angeordnet ist. Dies sichert die Lage der elektronische Einrichtung 7 im Gehäuse 4.

Zudem ist das Gehäuse 4 vergossen, um die mechanische Standfestigkeit des Abstandshalters 1 zu erhöhen, weil damit die die elektronische Einrichtung 7 im Gehäuse 4 mit Vergussmasse 19 gekapselt vorgesehen ist.

Die Anzeige 11 wird von einer Lichtquelle 11.1, nämlich LED, gebildet, und dient beispielsweise den Status der elektronische Einrichtung 7 visuell anzuzeigen. Hierzu ist die Lichtquelle 11.1 visuell erkennbar vorgesehen, indem diese in einer Gehäuseausnehmung 20 im Gehäuse 4 eingepasst ist.

Das Gehäuse 4 weist zudem eine flache Unterseite 5.2 und eine Oberseite 5.1 auf, an der sich die Führungsnut 6 ausbildet. Da das Gehäuse 4 aus einem elastischen Material besteht, kann es sich der Kontur des Packguts 3 - beispielsweise Coils - besonders genau anpassen.

Eine vergleichsweise hohe Sende- und Empfangsleistung wird ermöglicht, wenn der Abstandshalter 1 am als aufgewickeltem Metallband ausgeführten Packgut 3 im Bereich von plus minus 35 Grad zu Senkrechten des Packguts 3 angeordnet ist. Dies insbesondere dann, wenn der Abstandshalter 1 am als aufgewickeltes Metallband ausgeführten Packgut 3 im Bereich von plus minus 25 Grad zu Senkrechten des Packguts 3 angeordnet ist.

Der Abstandshalter 1 weist zudem eine Führungsausnehmung 21 für eine nicht dargestellte Umreifungsvorrichtung zum Abbinden des Packguts 3 auf. Diese Führungsausnehmung 21 läuft der Führungsnut 6, vorzugsweise beidseitig, geneigt, zu. Diese Führungsausnehmung 21 dient dazu, ein Umreifungsband 2 in der Führungsnut 6 erleichtert untergreifen zu können, beispielsweise von einer Vorkragzunge der Umreifungsvorrichtung.

## Patentansprüche

1. Abstandshalter zur Beabstandung eines Umreifungsbands (2) von einem Packgut (3), insbesondere aufgewickeltem Metallband, mit einem Gehäuse (4), das mindestens eine, insbesondere über das gesamte Gehäuse (4) durchgehend verlaufende, Führungsnut (6) für das Umreifungsband (2) aufweist, **dadurch gekennzeichnet, dass** der Abstandshalter (1) eine elektronische Einrichtung (7) mit mindestens einem Sensor (8) und mit wenigstens einer mit dem Sensor (8) verbundenen Telematikeinrichtung (9) im Gehäuse (4) aufweist.

2. Abstandshalter nach Anspruch 1, **dadurch gekennzeichnet, dass** die Telematikeinrichtung (9) eine Kommunikationseinheit (9.1) mit einer Antenne (9.2) aufweist, wobei die Antenne (9.2) der Telematikeinrichtung (9) in Draufsicht auf den Abstandshalter (1) gesehen im Gehäuse (4) seitlich neben der Führungsnut (6) angeordnet ist.

3. Abstandshalter nach Anspruch 1 oder 2, **dadurch gekennzeichnet, dass** ein als Drucksensor (8.2) ausgebildeter Sensor (8) unterhalb der Führungsnut (6) im Gehäuse (4) angeordnet ist.

4. Abstandshalter nach einem der Ansprüche 1 bis 3, **dadurch gekennzeichnet, dass** die elektronische Einrichtung (7) einen, vorzugweise wiederaufladbaren, Energiespeicher (10) zu deren elektrischen Versorgung aufweist, wobei der Energiespeicher (10) in Draufsicht auf den Abstandshalter (1) gesehen im Gehäuse (4) seitlich neben der Führungsnut (6) angeordnet ist.

5. Abstandshalter nach einem der Ansprüche 1 bis 4, **dadurch gekennzeichnet, dass** die Führungsnut (6) in Draufsicht auf den Abstandshalter (1) gesehen das Gehäuse (4) in ein erstes und ein zweites Gehäusesegment (4.1, 4.2) teilt, die sich entlang der Führungsnut (6) gegenüberliegen.

6. Abstandshalter nach Anspruch 2 und 5, **dadurch gekennzeichnet, dass** die Kommunikationseinheit (9.1) im ersten Gehäusesegment (4.1) und die Antenne (9.2) der Kommunikationseinheit (9.1) im zweiten Gehäusesegment (4.2) angeordnet sind.

7. Abstandshalter nach Anspruch 5, **dadurch gekennzeichnet, dass** die elektronische Einrichtung (7) im ersten Gehäusesegment (4.1) vorgesehen ist.

8. Abstandshalter nach einem der Ansprüche 1 bis 7, **dadurch gekennzeichnet, dass** die Führungsnut (6) an ihrem Nutgrund (6.1) eine Stufe (15) aufweist.

9. Abstandshalter nach Anspruch 3 und 8, **dadurch gekennzeichnet, dass** der Sensor (8) unterhalb der Stufe (15) angeordnet ist.

10. Abstandshalter nach einem der Ansprüche 1 bis 9, **dadurch gekennzeichnet, dass** das Gehäuse (4) eine Bodenplatte (17) und einen Oberkörper (18) aufweist, zwischen denen die elektronische Einrichtung (7) angeordnet ist.

11. Abstandshalter nach einem der Ansprüche 1 bis 10, **dadurch gekennzeichnet, dass** die elektronische Einrichtung (7) im Gehäuse (4), insbesondere mit Vergussmasse (19), gekapselt vorgesehen ist.

12. Abstandshalter nach einem der Ansprüche 1 bis 11, **dadurch gekennzeichnet, dass** die elektronische Einrichtung (7) eine Lichtquelle (11.1), insbesondere LED, aufweist, die visuell erkennbar vorgesehen ist.

13. Abstandshalter nach einem der Ansprüche 1 bis 12, **dadurch gekennzeichnet, dass** das, insbesondere aus einem elastischen Material bestehende, Gehäuse (4) eine flache oder gewölbte Unterseite (5.2) aufweist, welche der Oberseite (5.1) des Gehäuses (4) mit der Führungsnut (6) gegenüberliegt.

14. Anordnung mit einem Packgut (3), insbesondere aufgewickeltem Metallband, mit einem, vorzugsweise in Umfangsrichtung des Packguts verlaufenden, Umreifungsband (2) und mit einem zwischen dem Packgut (3) und dem Umreifungsband (2) vorgesehenen Abstandshalter (1) nach einem der Ansprüche 1 bis 13, wobei sich das Umreifungsband (2) in der Führungsnut (6) des Abstandshalters (1) erstreckt.

15. Anordnung nach Anspruch 14, **dadurch gekennzeichnet, dass** der Abstandshalter (1) auf der Oberseite des Packguts (3) angeordnet ist.

16. Anordnung nach Anspruch 15, **dadurch gekennzeichnet, dass** der Abstandshalter (1) am als aufgewickeltes Metallband ausgeführten Packgut (3) im Bereich von plus minus 35 Grad, insbesondere von plus minus 25 Grad, zu Senkrechten des Packguts (3) angeordnet ist.
